# EUROPEAN PATENT SPECIFICATION

(11) **EP 0 365 342 B1**
(45) Date of publication and mention of the grant of the patent: **15.06.1994**
(21) Application number: 89310805.0
(22) Date of filing: 20.10.1989
(51) Int. Cl.: G01N 27/12

(54) **Contamination meter**
Verunreinigungsmessgerät
Appareil de mesure de la contamination

(30) Priority: 21.10.1988 GB 8824652
(43) Date of publication of application: 25.04.1990
(73) Proprietor: NNC LIMITED, Knutsford Cheshire WA16 8QZ (GB)
(72) Inventor: Allan, Stuart John, Knutsford Cheshire, WA16 9BU (GB); Bates, Steven, Sale Cheshire, M33 5GU (GB); Monday, Christopher Harry, Frodsham Cheshire, WA6 7EP (GB)
(74) Representative: Hoste, Colin Francis

(56) References cited:
- EP-A- 0 271 102
- EP-A- 0 320 469
- DE-B- 2 729 131
- US-A- 3 753 099
- US-A- 3 849 723
- INSTRUMENTS & EXPERIMENTAL TECHNIQUES, vol. 26, no. 4, July-August 1983, pp 988, 989, New York, US; V.B. BARKOV et al.: "Small electrolytic cell with a magnetic clamp for the study of semiconducting materials"
- PATENT ABSTRACTS OF JAPAN, vol. 8, no. 60, (P-262)(1497), 22 March 1984 & JP A 58210557

## Description

This invention relates to measurement of the degree of contamination of a surface, particularly by soluble salts.

DE-B-2729131 discloses a meter for measuring the electrical resistance of a liquid medium under test. The medium is held in a cup which contains concentric electrodes between which the electrical resistance of the test medium is measured. A lid is pivotable to a closed position relative to the base to retain the test medium.

US-A-3849723 discloses a method of measuring the concentration of soluble salts in a medium under test. The medium is carried by a sheet. The sheet is clamped between electrodes of a meter, and the electrical resistance of the test medium is measured to determine the concentration.

US-A-3753099 discloses apparatus for the measurement of the quantity of fluid present on a paper strip. The strip is clamped between insulated electrodes of a meter, which provides a digital reading of the fluid quantity. The strip acts as a dielectric in a capacitor formed by the electrodes, the dielectric constant and the Q factor depending upon the fluid content of the strip.

An object of the invention is to provide a simple meter and a method for measuring the degree of contamination of a surface.

According to one aspect of the invention there is provided a meter for measuring the electrical resistance of a test medium, the meter comprising a base for receiving the test medium and including concentric electrodes between which the electrical resistance of the test medium can be measured; a lid pivotable from an open position to a closed position relative to the base about an axis parallel to the plane of the base for retaining the test medium in the base; and means coupled to the electrodes for measuring said electrical resistance; characterised by a pressure pad which is carried by the lid and which is urged towards the electrodes when the lid is closed; and a catch for holding the lid closed to the base so that the pressure pad applies an even and predetermined pressure to a sheet carrying the test medium when the sheet is located between the pressure pad and the electrodes.

According to another aspect of the invention there is provided a method of measuring the concentration of soluble salts on a surface, the method comprising wetting a sheet of standard absorbency and applying it to the surface for a predetermined period of time so that the sheet absorbs soluble salts from the surface to form a test medium; removing the sheet from the surface and placing it in the base of a meter in contact with electrodes which are concentrically arranged in said base; closing a pivotable lid of the meter so that a pressure pad carried by the lid urges the sheet into contact with the electrodes; and, by holding the pivotable lid closed with a catch, applying an even and predetermined pressure to the sheet by the pressure pad; and then measuring the electrical resistance of the test medium to determine said concentration.

An embodiment of the invention will now be described, by way of example only, with reference to the accompanying drawings, in which:
Figure 1 shows a plan view of a contamination meter with a lid partly broken away;
Figure 2 shows a fragmentary sectional view on a line II-II of Figure 1, and
Figure 3 shows a fragmentary sectional view on a line III-III of Figure 1.

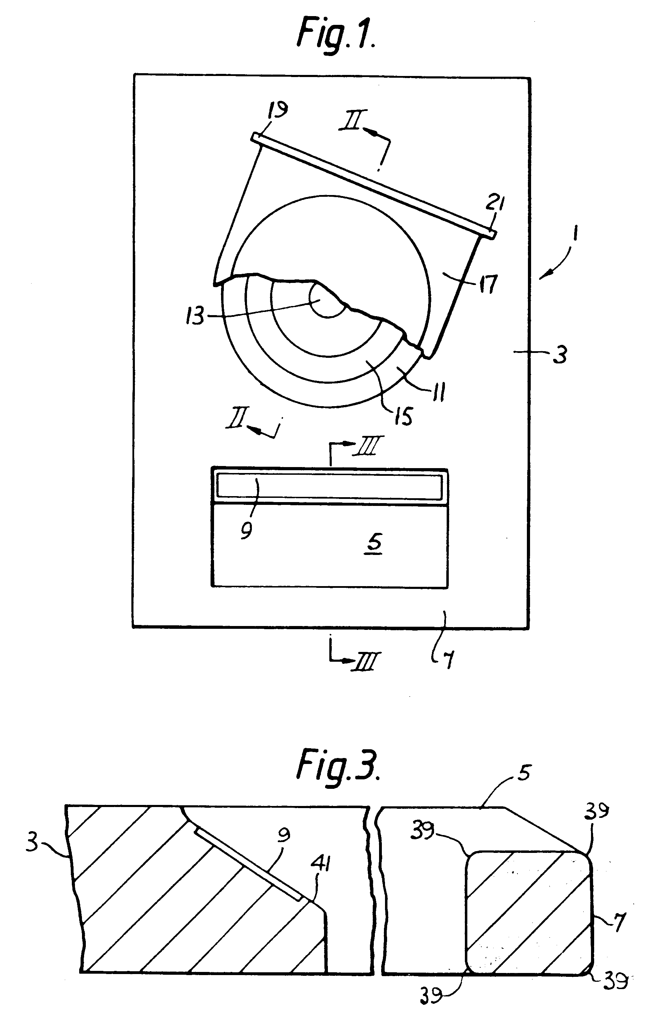

Referring now to Figure 1, a contamination meter 1 comprises a rectangular housing 3 having a cavity 5 which defines a carrying handle 7 and a display face 9.

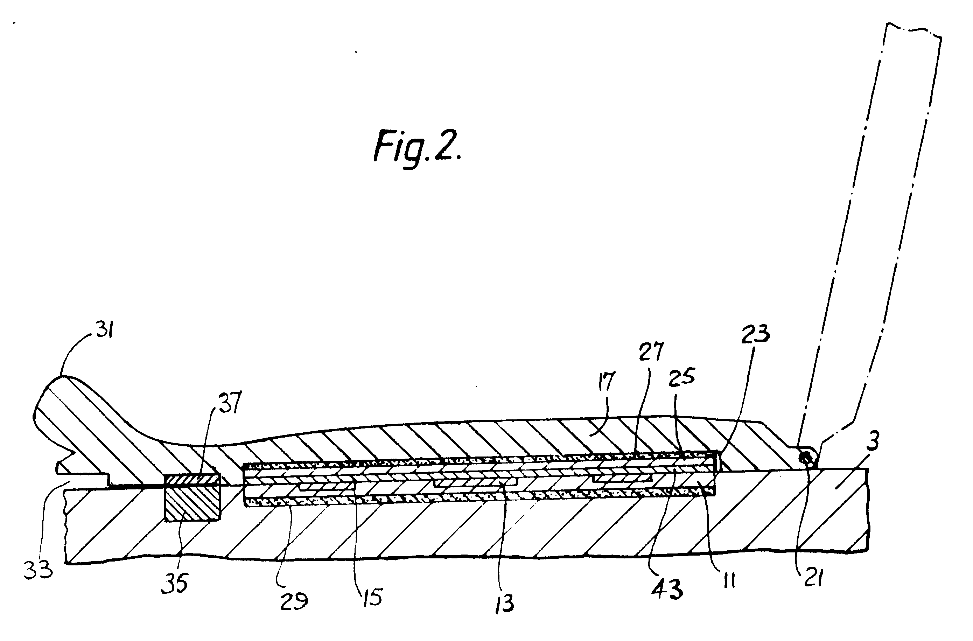

A base plate 11 located on the housing 3 has a circular central electrode 13 and an outer annular electrode 15 concentric with the electrode 13. A lid 17 (only partly shown) is pivoted at points 19,21 so that it can be closed on to the base plate 11 to clamp an absorbent test paper (not shown in this figure) to the base plate in contact with the electrodes 13 and 15. As shown in Figure 2, the lid 17 has a cavity 23 in which a pressure plate 25 is located and is biased away from the lid 17 by a resilient foam backing sheet 27 whichis bonded to the inside surface of the lid 17 and to the pressure plate 25. A compliant seat 29 bonded to the housing 3 supports the base plate 11. The lid 17 is shown closed in Figure 2 but the open position of the lid is shown in broken outline.

A knob 31 and a lip 33 are provided at the edge of the lid 17 to facilitate pivoting of the lid about the hinge points 19,21. A magnetic catch 35 is mounted in the housing 3 and cooperates with a plate 37 in the lid to hold the lid closed, with the pressure plate 25 urged into contact with the base plate 11.

As shown in Figure 3, the handle 7 comprises a square-sectioned portion of the housing 3 with radiused corners 39. The face of the display 9 is located on a sloping surface 41 to assist in the reading of the displayed data. The meter 1 is readily portable.

The electrodes 13,15 are connected to a battery-operated resistance measuring circuit (not shown) located within the housing 3.

In use of the contamination meter, a test paper 43 which is saturated with high purity demineralised water is placed against a surface, the degree of contamination of which is to be measured. The test paper is made to conform to irregularities in the surface by use of tweezers or by pressure applied through a non-absorbent, non-contaminating waterproof membrane. The test paper is left in contact with the surface for a predetermined period of time, for example one minute, during which any soluble salts on the surface dissolve In the water contained in the test paper. The test paper 43 is then removed using tweezers, and is placed on the base plate 11 of the meter (see Figure 2). The lid is closed and is clamped by the magnetic catch 35,37 to apply an even and predetermined load to the test paper, urging the test paper into contact with the electrodes 13,15. The resistance of the test paper is then measured between the electrodes. The measured resistance value corresponds to the maximum salt concentration present on the test paper. From the geometry of the electrodes and the measured resistance value the meter calculates the salt contamination level in microgrammes/cm², and displays it digitally on the display 9.

The electrodes 13 and 15 are made from high-purity copper. The base plate 11 in which they are set is made of non-absorbent, non-conducting material, such as resin-impregnated glass fibre. The pressure plate 25 is also made from non-absorbent, non-conducting material, such as polypropylene. The resilient foam sheet 27 might be formed of polyurethane, and the compliant seat 29 of synthetic rubber.

It is important that an even load be applied to the test paper 43, preferably at least 10 g/cm². It is also important that the test paper shall have a very low soluble salt level before use, for example less than 5 microgrammes for an 11cm diameter x 0.015cm thick test paper with standard absorbency characteristics. Such an 11cm diameter test paper would become saturated with 1.7 cc of the high purity demineralised water. The demineralised water should preferably have an electrical resistivity greater than 17 megohms/cm at 25°C and should be dispensed from a non-contaminating dispensing syringe.

After use, when the test paper 43 is removed from the base plate 11, all traces of contamination should be removed by washing the base plate with non-contaminating tissues soaked in the high-purity demineralised water.

The contamination meter and the method according to the invention have applications in, for example, the fields of nuclear, marine and aircraft engineering and the oil, gas and construction industries. It may be used, for example, for testing surfaces prior to painting or the application of insulation, and for checking components for freedom from contamination prior to construction and commissioning.

## Claims

1. A meter for measuring the electrical resistance of a test medium, the meter (1) comprising a base (11) for receiving the test medium and including concentric electrodes between which the electrical resistance of the test medium can be measured; a lid (17) pivotable from an open position to a closed position relative to the base about an axis (19,21) parallel to the plane of the base for retaining the test medium in the base; and means coupled to the electrodes for measuring said electrical resistance; characterised by a pressure pad (25) which is carried by the lid and which is urged towards the electrodes when the lid is closed; and a catch (35) for holding the lid closed to the base so that the pressure pad applies an even and predetermined pressure to a sheet (43) carrying the test medium when the sheet is located between the pressure pad and the electrodes.

2. A meter as claimed in Claim 1, characterised by a layer (27) of resilient material between the lid (17) and the pressure pad (25) for urging the pressure pad towards the electrodes (13,15).

3. A meter as claimed in Claim 1 or Claim 2, characterised by means responsive to the measured electrical resistance to determine salt contamination level present on the sheet (43); and digital display means (9) for indicating said contamination level.

4. A meter as claimed in any preceding claim, characterised in that the catch (35) comprises a magnetic catch.

5. A meter as claimed in any preceding claim, characterised in that the electrodes (13,15) are formed of high-purity copper.

6. A meter as claimed in any preceding claim, characterised in that the base (11) and the pressure pad (25) are formed of substantially non-absorbent, electrically-insulating material or materials.

7. A method of measuring the concentration of soluble salts on a surface, the method comprising wetting a sheet of standard absorbency and applying it to the surface for a predetermined period of time so that the sheet absorbs soluble salts from the surface to form a test medium (43); removing the sheet from the surface and placing it in the base (11) of a meter in contact with electrodes (13,15) which are concentrically arranged in said base; closing a pivotable lid (17) of the meter so that a pressure pad (25) carried by the lid urges the sheet into contact with the electrodes; and, by holding the pivotable lid closed with a catch (35), applying an even and predetermined pressure to the sheet by the pressure pad; and then measuring the electrical resistance of the test medium to determine said concentration.

8. A method as claimed in Claim 7, characterised in that the sheet (43) is wetted with high-purity demineralised water having an electrical resistivity greater than 17 megohms/cm at 25°C.

9. A method as claimed in Claim 7 or Claim 8, characterised in that the sheet (43) is clamped in contact with the electrodes (13,15) with a substantially uniform loading of at least 10g/cm².

10. A method as claimed in any one of Claims 7-9, characterised in that the sheet (43) comprises a paper sheet of predetermined dimensions.

## Patentansprüche

1. Meßgerät zur Messung des elektrischen Widerstands eines Probenmediums, das Meßgrät (1) enthaltend, eine Grundfläche (11), die das Probenmedium aufnimmt und zwei konzentrische Elektroden beinhaltet, zwischen denen der elektrische Widerstand des Probenmediums gemessen werden kann; einen Deckel (17), der von einer offenen Position um eine Achse (19,21) in eine in Bezug auf die Grundfläche geschlossene Position geschwenkt werden kann, die sich parallel zu der Grundflächenebene befindet, um das Probenmedium auf der Grundfläche zurückzuhalten; und Vorrichtungen, die an die Elektroden angeschlossen sind, um den elektrischen Widerstand zu messen;
**gekennzeichnet durch**
ein Druckpolster (25), das von dem Deckel getragen wird und das gegen die Elektroden gedrückt wird, wenn der Deckel geschlossen ist; und einen Haken (35), um den Deckel in Bezug auf die Grundfläche geschlossen zu halten, so daß das Druckpolster einen gleichmäßigen und vorherbestimmten Druck auf ein Blatt (43) ausübt, das das Probenmedium trägt, wenn sich das Blatt zwischen dem Druckpolster und den Elektroden befindet.

2. Meßgerät nach Anspruch 1,
**gekennzeichnet durch**
eine Schicht (27) aus elastischem Material zwischen dem Deckel (17) und dem Druckpolster (25), um das Druckpolster gegen die Elektroden (13,15) zu drücken.

3. Meßgerät gemäß Anspruch 1 oder Anspruch 2,
**gekennzeichnet durch**
Vorrichtungen, die auf den gemessenen elektrischen Widerstand reagieren, um das Maß der Verunreinigung auf dem Blatt (43) zu bestimmen; und digitale Anzeigevorrichtungen (9), die die Höhe der Verunreinigung angeben.

4. Meßgerät nach jedem der vorhergehenden Ansprüche,
**dadurch gekennzeichnet**,
daß der Haken (35) ein magnetischer Haken ist.

5. Meßgerät nach jedem der vorhergehenden Ansprüche,
**dadurch gekennzeichnet**,
daß die Elektroden (13,15) aus hochreinem Kupfer gefertigt sind.

6. Meßgerät nach jedem der vorhergehenden Ansprüche,
**dadurch gekennzeichnet**,
daß die Grundfläche (11) und das Druckpolster (25) aus nicht absorbierendem, elektrisch isolierendem Material oder derartigen Materialien gefertigt sind.

7. Verfahren, um die Konzentration von löslichen Salzen auf einer Oberfläche messen, wobei das Verfahren die Schritte enthält, daß ein Blatt mit einer Standardabsorption naß gemacht wird und über eine bestimmte Zeitspanne auf die Oberfläche gelegt wird, so daß das Blatt die löslichen Salze von der Oberfläche absorbiert, um ein Probenmedium (43) zu bilden; daß das Blatt von der Oberfläche entfernt wird und auf die Grundfläche (11) eines Meßgerätes in Kontakt mit den Elektroden (13,15) gelegt wird, die konzentrisch in der Grundfläche angeordnet sind; daß der schwenkbare Deckel (17) des Meßgerätes geschlossen wird, so daß ein Druckpolster (25), das der Deckel trägt, das Blatt in Kontakt mit den Elektroden drückt; und daß durch das Druckpolster auf das Blatt ein gleichmäßiger und vorherbestimmter Druck ausgeübt wird, indem der. schwenkbare Deckel durch einen Haken (35) geschlossen gehalten wird; und daß dann der elektrische Widerstand des Probenmediums gemessen wird, um die Konzentration zu bestimmen.

8. Verfahren gemäß Anspruch 7,
**dadurch gekennzeichnet**,
daß das Blatt (43) mit demineralisiertem Wasser hoher Reinheit naß gemacht wird, das bei 25°C einen elektrischen Widerstand von mehr als 17 MΩ/cm hat.

9. Verfahren gemäß Anspruch 7 oder Anspruch 8,
**dadurch gekennzeichnet**,
daß das Blatt (43) in Kontakt mit den Elektroden (13,15) auf diese geklemmt wird, wobei das Blatt einer gleichmäßigen Belastung von mindestens 10 g/cm² ausgesetzt ist.

10. Verfahren nach jedem der vorhergehenden Ansprüche 7-9,
**dadurch gekennzeichnet**,
daß das Blatt (43) aus einem Blatt Papier mit bestimmten Abmessungen besteht.

## Revendications

1. Organe de mesure de la résistance électrique d'une matière d'épreuve, l'organe de mesure (1) comportant une base (11) destinée à coopérer avec la matière d'épreuve et contenant des électrodes concentriques entre lesquelles la résistance électrique de la matière d'épreuve peut être mesurée, un couvercle (17) qui peut pivoter d'une position d'ouverture à une position de fermeture par rapport à la base autour d'un axe (19, 21) qui est parallèle au plan de la base afin que la matière d'épreuve soit retenue dans la base, et un dispositif couplé aux électrodes et destiné à mesurer ladite résistance électrique, caractérisé par un patin de pression (25) supporté par le couvercle et qui est repoussé vers les électrodes lorsque le couvercle est fermé, et un organe (35) de retenue destiné à maintenir le couvercle fermé sur la base afin que le patin de pression applique une pression régulière et prédéterminée à une feuille (43) portant la matière d'épreuve lorsque la feuille est disposée entre le patin de pression et les électrodes.

2. Organe de mesure selon la revendication 1, caractérisé par une couche (27) d'une matière élastique placée entre le couvercle (17) et le patin de pression (25) et destinée à repousser le patin de pression vers les électrodes (13, 15).

3. Organe de mesure selon la revendication 1 ou 2, caractérisé par un dispositif qui, en fonction de la résistance électrique mesurée, est destiné à déterminer le niveau de contamination par des sels présents sur la feuille (43), et un dispositif d'affichage numérique (9) destiné à indiquer le niveau de contamination.

4. Organe de mesure selon l'une quelconque des revendications précédentes, caractérisé en ce que l'organe de retenue (35) est un dispositif magnétique.

5. Organe de mesure selon l'une quelconque des revendications précédentes, caractérisé en ce que les électrodes (13, 15) sont formées de cuivre de haute pureté.

6. Organe de mesure selon l'une quelconque des revendications précédentes, caractérisé en ce que la base (11) et le patin de pression (25) sont formés d'une ou plusieurs matières isolantes de l'électricité et pratiquement non absorbantes.

7. Procédé de mesure de la concentration de sels solubles sur une surface, le procédé comprenant le mouillage d'une feuille ayant des propriétés d'absorption de référence et son application sur la surface pendant une période prédéterminée afin que la feuille absorbe les sels solubles de la surface et forme une matière d'épreuve (43), l'enlèvement de la feuille de la surface et sa disposition dans la base (11) d'un organe de mesure, au contact d'électrodes (13, 15) qui sont disposées concentriquement dans la base, la fermeture d'un couvercle pivotant (17) de l'organe de mesure afin que le patin de pression (25) porté par le couvercle repousse la feuille au contact des électrodes et, alors que le couvercle pivotant est maintenu fermé par un organe (35) de retenue, l'application d'une pression uniforme prédéterminée à la feuille par le patin de pression, puis la mesure de la résistance électrique de la matière d'épreuve pour la détermination de ladite concentration.

8. Procédé selon la revendication 7, caractérisé en ce que la feuille (43) est mouillée par de l'eau déminéralisée très pure ayant une résistivité supérieure à 17 MΩ/cm à 25 °C.

9. Procédé selon la revendication 7 ou 8, caractérisé en ce que la feuille (43) est serrée au contact des électrodes (13, 15) avec une force pratiquement uniforme d'au moins 1000 Pa (10 g/cm²).

10. Procédé selon l'une quelconque des revendications 7 à 9, caractérisé en ce que la feuille (43) est une feuille de papier de dimensions prédéterminées.
